# EUROPÄISCHE PATENTSCHRIFT

(11) **EP 1 899 130 B1**
(45) Veröffentlichungstag und Bekanntmachung des Hinweises auf die Patenterteilung: **01.02.2012**
(21) Anmeldenummer: 06761756.3
(22) Anmeldetag: 03.07.2006
(51) Int. Cl.: B29C 33/00, B29C 44/14, B62D 29/00, B62D 25/06, B62D 65/06

(54) **VERFAHREN ZUM HERSTELLEN EINES VERBUND-KAROSSERIETEILS FÜR EIN FAHRZEUG**
METHOD FOR PRODUCTION OF A COMPOSITE CHASSIS PIECE FOR A VEHICLE
PROCEDE DE PRODUCTION D'UN ELEMENT DE CARROSSERIE COMPOSITE D'UN VEHICULE

(30) Priorität: 07.07.2005 DE 102005031884
(43) Veröffentlichungstag der Anmeldung: 19.03.2008
(73) Patentinhaber: Webasto AG, 82131 Stockdorf (DE)
(72) Erfinder: DICHTL, Matthias, 82547 Eurasburg (DE); KIESEWETTER, Frank, 82110 Germering (DE); WOKÖCK, Jan, 83043 Bad Aibling (DE); HOFMANN, Dirk, 81927 München (DE)
(74) Vertreter: Bosch, Matthias
(86) Internationale Anmeldenummer: PCT/DE2006/001154
(87) Internationale Veröffentlichungsnummer: WO 2007/006263

(56) Entgegenhaltungen:
- EP-A1- 0 995 667
- EP-A2- 1 086 882
- EP-A2- 1 325 862
- DE-A1- 3 634 596
- DE-A1- 10 134 326
- DE-A1- 10 219 495
- DE-U1- 20 113 525

## Beschreibung

Die vorliegende Erfindung betrifft ein Verfahren zur Herstellung eines Verbund-Karosserieteils für ein Fahrzeug, insbesondere eines Dachmoduls.

In der DE 101 63 709 A1 ist ein Dachmodul beschrieben, welches eine Außenhaut aus Stahlblech oder einer Kunststoffolie aufweist, die an ihrer Innenseite mit einer Schaumkunststoffschicht auf Polyurethanbasis hinterschäumt ist. In einem mittleren Abschnitt weist die Außenhaut eine Öffnung auf, in welcher eine transparente Platte vorgesehen ist, die in ihrem Umfangsrandbereich an der Unterseite ebenfalls mit der Schaumkunststoffschicht hinterschäumt ist. Zwischen der Kante der transparenten Platte und dem Rand der Öffnung in der Außenhaut ist ein Spalt ausgebildet, der mit dem Schaumkunststoff ausgeschäumt sein kann, wobei dies in einer solchen Weise geschieht, dass die Außenseite des Dachmoduls in diesem Bereich eben ist. Alternativ kann der Spalt durch ein in den Schaumkunststoff eingeschäumtes Gummiprofil oder durch ein auf die Abkantung des Rands der Außenhaut aufgestecktes und in den Schaumkunststoff eingeschäumtes Dichtungsprofil abgedeckt sein. An dem von der Platte abgewandten Rand ist die Außenhaut abgekantet.

In der älteren deutschen Patentanmeldung mit dem Aktenzeichen 10 2004 021 337 ist ein Dachmodul beschrieben, bei welchem eine Außenhaut aus Kunststoff oder Metall mit einer Trägerstruktur aus LFI (Lang-Faser-Injektion) oder PHC (Paper Honey Comb) Material hinterschäumt ist, wobei auf der Sichtseite (d.h. der Außenseite) der Außenhaut am Schäumwerkzeug eine umlaufende Dichtung vorgesehen ist, um das Vordringen von Schäummaterial, abgesehen vom unmittelbaren Randbereich, auf die Sichtseite der Außenhaut zu verhindern. Dieses Dichtungskonzept hat den Nachteil, dass ein Rand des Schämmaterials auf der Sichtseite der Außenhaut entsteht, wobei ferner starke Sprünge in der Dachhochrichtung im Dichtungsbereich kritisch sind.

In der DE 36 36 596 wird ein flächiges Sichtelement auf einer Seite mit einem Kunststoff versehen wobei zwei Formhälften eingesetzt werden und das Sichtelement in einer ersten Formhälfte positioniert wird. Am Rande des Sichtelementes wird eine Dichtungsanordnung zur dichtenden Anlage gebracht, wodurch der Kunststoff während des Formverfahrens nicht zur Sichtseite fliessen kann.

Es ist Aufgabe der vorliegenden Erfindung, ein Verfahren zur Herstellung eines Verbund-Karosserieteils mit einem Sichtelement zu schaffen, wobei ein unerwünschtes Vordringen von Kunststoffmaterial auf die Sichtseite des Sichtelements auf einfache Weise verhindert werden soll.

Diese Aufgabe wird erfindungsgemäß gelöst durch ein Verfahren, wie es im Anspruch 1 definiert ist.

Bei dieser Lösung ist vorteilhaft, dass auf einfache Weise ein unerwünschtes und unkontrolliertes Vordringen von Kunststoffmaterial auf die Sichtseite des Sichtelements verhindert werden kann.

Vorzugsweise handelt es sich bei dem Verbund-Karosserieteils um ein Dachmodul.

Bevorzugte Ausgestaltungen der Erfindung ergeben sich aus den Unteransprüchen.

Im folgenden wird die Erfindung anhand der beigefügten Zeichnungen beispielhaft näher erläutert. Dabei zeigen:
- Fig. 1: eine Querschnittansicht eines Werkzeugs bei einem erfindungsgemäßen Verfahren zur Herstellung eines Dachmoduls, wobei das Werkzeug im geschlossenen Zustand gezeigt ist;
- Fig. 2: eine Ansicht wie Fig. 1, wobei eine abgewandelte Ausführungsform gezeigt ist; und
- Fig. 3: eine Ansicht wie Fig. 1, wobei eine weitere abgewandelte Ausführungsform gezeigt ist.

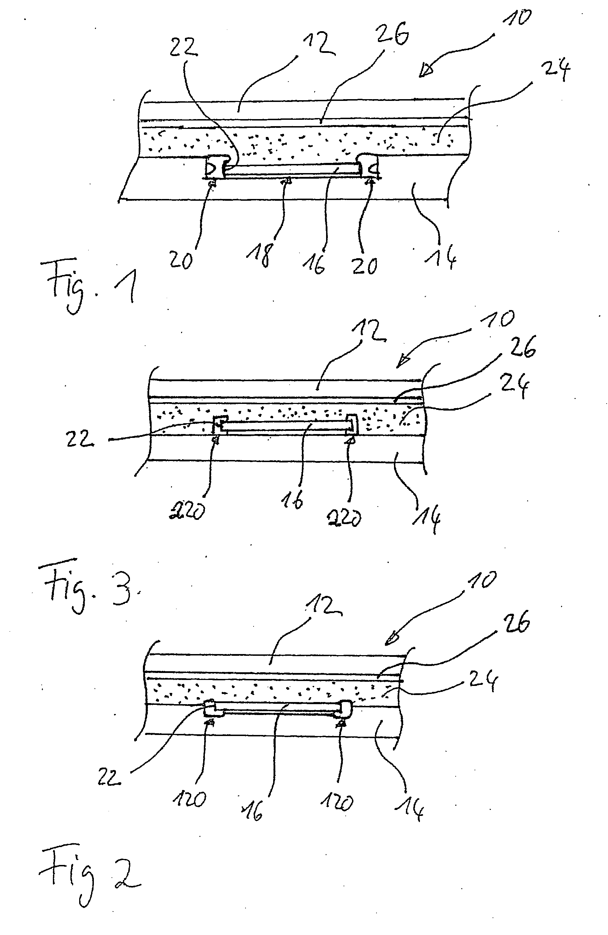

In Fig. 1 ist ein Bereich eines Werkzeugs 10 gezeigt, das ein Oberwerkzeug 12 und ein Unterwerkzeug 14 umfaßt. Das Werkzeug 10 kann auf übliche Weise geöffnet bzw. geschlossen werden, indem das Oberwerkzeug 12 und das Unterwerkzeug 14 relativ zueinander verstellt werden. In Fig. 1 ist das Werkzeug 10 im geschlossenen Zustand gezeigt. Grundsätzlich könnten die Rollen des Oberwerkzeugs und des Unterwerkzeugs auch vertauscht sein, d.h. die Benennung des in Fig. 1 mit 14 bezeichneten Werkzeugteils als Unterwerkzeug ist lediglich beispielhaft zu verstehen.

Zu Beginn des Herstellungsverfahrens wird zunächst ein Sichtelement 16 vorgefertigt, d.h. auf die richtige Dicke und in die richtige Form gebracht. Das Sichtelement 16 ist flächig ausgebildet, und es kann sich dabei beispielsweise um ein Blech handeln. Die Bezeichnung "Sichtelement" soll ausdrücken, dass dieses Element auf einer Sichtseite des herzustellenden Verbundkarosserieteils zu liegen kommt. Dabei kann es sich grundsätzlich je nach Funktion des Verbundkarosserieteils bzw. des Sichtelements um die nach Einbau im Fahrzeug außen liegende oder die innen liegende Seite handeln.

Ferner wird eine Außenhaut 26, bei der es sich beispielsweise um eine Kunststofffolie oder Stahl- oder Aluminiumblech handeln kann, vorgefertigt und insbesondere vorgeformt, beispielsweise mittels Tiefziehen.

Das Sichtelement 16 wird bei geöffnetem Werkzeug 10 in eine Ausnehmung 18 in dem Unterwerkzeug 14 eingelegt, wobei in der Ausnehmung 18 eine aufblasbare Dichtungsanordnung 20 vorgesehen ist, die im gezeigten Beispiel so in der Ausnehmung 18 angeordnet ist, dass sie die Umfangsrandkante 22 des Sichtelements 16 umgreifen kann, nachdem die Dichtungsanordnung 20 mit einem Medium, z.B. Luft, entsprechend aufgeblasen wurde, wobei das Einlegen des Sichtelements 16 in die Ausnehmung 18 im nicht aufgeblasenen Zustand der Dichtungsanordnung 20 erfolgt.

Um das Sichtelement 16 am Unterwerkzeug 14 zu halten, kann beispielsweise zwischen dem Sichtelement 16 und dem Unterwerkzeug 14 im Bereich der Ausnehmung 18 ein Unterdruck erzeugt werden (üblicherweise mittels Vakuumkanälen (nicht gezeigt) in dem Unterwerkzeug) oder es können mittels eines Elektromagneten entsprechende magnetische Kräfte erzeugt werden, die auf das Sichtelement 18 wirken (dies setzt voraus, dass das Sichtelement 16 aus magnetisierbarem Material gefertigt ist).

Die Dichtungsanordnung 20 umschließt die Randkante 22 des Sichtelements 18 über den gesamten Umfang.

Ferner wird die Außenhaut 26 in das Oberwerkzeug 12 eingelegt und dort gehalten.

Im nächsten Schritt wird ein Kunststoffmaterial 24 auf der von dem Unterwerkzeug 14 weg weisenden Seite des Sichtelements 16 (d.h. auf der von der Sichtseite abgewandten Seite) bzw. auf der von dem Oberwerkzeug 12 weg weisenden Seite der Außenhaut 26 aufgebracht. Falls das Kunststoffmaterial 24 ausschließlich in flüssiger Form eingebracht werden kann, wird das Werkzeug 10 vorher geschlossen. Im Zusammenwirken mit der Außenhaut 26 sorgt das Oberwerkzeug 12 dabei für eine Formgebung der von dem Sichtelement 16 abgewandten Seite des Kunststoffmaterials 24, während das Unterwerkzeug 14 für eine Formgebung des Kunststoffnaterials 24 auf der anderen, d.h. der von dem Außenhaut 26 abgewandten, Seite des Kunststoffmaterials 24 sorgt. Das Sichtelement 16 und die Außenhaut 26 werden dabei in dem Werkzeug 19 mit dem Kunststoffmaterial 24 hinterpresst, hinterspritzt oder hinterfuttert. Vorzugsweise weist das Kunststoffmaterial 24 Polyurethan als hauptsächliche oder ausschließliche Komponente auf. Vorzugsweise wird das Kunststoffmaterial 24 mittels eines sogenannten Lang-Faser-Injektionsverfahrens (LFI-Verfahren) in das Werkzeug 10 eingebracht. Alternativ kann das Kunststoffmaterial als PHC-Struktur (Paper-Honey-Comb-Struktur) in das Werkzeug 10 eingebracht werden. Dabei handelt es sich um eine Verbundstruktur aus einer Papier-Waben-Struktur und einer mit Polyurethan getränkten Glasfasermatte. Optional kann das Polyurethan auch in diesem Fall mittels eines LFI-Verfahrens, d.h. als Gemisch aus Polyurethan und geschnittenen Langglasfasern, aufgebracht werden.

Das Unterwerkzeug 14 bzw. das Sichtelement 16 sind so geformt, dass sich das Kunststoffmaterial 24 mindestens zum Teil über die Kante 20 des Sichtelements 16 hinaus erstreckt und in diesem Bereich durch die Oberfläche des Unterwerkzeugs 14 eine Formgebung erfährt.

Nach Abschluß der Formgebung des Kunststoffmaterials 24 durch das Oberwerkzeug 12 und das Unterwerkzeug 14, d.h. nach hinreichendem Aushärten des Kunststoffmaterials 24, wird das Werkzeug 10 geöffnet und das fertige Verbundbauteil kann aus dem Werkzeug 10 entnommen werden, wobei vorher zweckmäßigerweise das Aufblasmedium aus der Dichtung 20 abgelassen wird und eventuelle Haltekräfte auf magnetischer Basis oder Vakuumbasis, mittels welchen das Sichtelement 16 an dem Unterwerkzeug 14 gehalten wird, aufgehoben werden.

Bei dem Verbundbauteil handelt es sich vorzugsweise um ein Dachmodul, d.h. ein in eine Karosserieöffnung einsetzbares Dachsystem, wobei die Außenhaut 26 dann die nach außen weisende Dachhaut bildet, während das Sichtelement 16 nach innen, d.h. zum Fahrzeuginnenraum hin weist, und nach Montage des Dachmoduls am Fahrzeug von Fahrzeuginnenraum aus sichtbar ist. Dabei kann es sich bei dem Sichtelement 16 beispielsweise um einen Verstärkungsholm handeln, der aus Design-Gründen vom Fahrzeuginnenraum aus sichtbar sein soll.

Grundsätzlich sind jedoch auch Ausführungsformen denkbar, bei welchen keine Außenhaut 26 in das Werkzeug 10 eingelegt wird, sondern die Formgebung des Kunststoffmaterials 24 auf der von dem Sichtelement 16 abgewandten Seite ausschließlich durch das Oberwerkzeug 12 erfolgt.

In Fig.2 ist eine abgewandelte Ausführungsform gezeigt, bei welcher die Dichtungsanordnung nicht als aufblasbare Dichtung ausgebildet ist, sondern als "überstehende" Dichtung 120, die einen Winkel bildet, um sich sowohl von der dem Unterwerkzeug 14 zugewandten Seite des Sichtelements 16 als auch an die Umfangsrandkante 22 des Sichtelements 16 anzulegen. Um das Sichtelement 16 zur dichtenden Anlage an die Dichtungsanordnung 120 zu bringen, müssen entsprechende Kräfte erzeugt werden, die auf das Sichtelement 16 wirken und dieses zum Unterwerkzeug 14 hin drängen. Dies kann beispielsweise durch Erzeugen eines Vakuums zwischen dem Sichtelement 16 und dem Unterwerkzeug 14 oder durch auf das Sichtelement 16 wirkende magnetische Kräfte erzielt werden.

Wie bei der Ausführungsform von Fig. 1 wird der gesamte Bereich der von dem Unterwerkzeug 14 abgewandten Seite des Sichtelements 16, welcher von der Dichtungsanordnung 120 umfasst wird, mit dem Kunststoffmaterial 24 versehen.

In Fig. 3 ist eine weitere abgewandelte Ausführungsform gezeigt, wobei hier im Gegensatz zu den Beispielen von Fig. 1 und 2 das Konzept der sogenannten "verlorenen Dichtung" realisiert ist, d.h. statt einer am Unterwerkzeug 14 vorgesehenen Dichtungsanordnung 20 wird hier die Dichtwirkung mittels einer Dichtungsanordnung 220 erzielt, die vor dem Schließen des Werkzeugs 10 und dem Einbringen des Kunststoffs 24 in das Werkzeug 10 so an dem Sichtelement 16 angebracht wird, dass sie dichtend anliegt. Ferner wird die Dichtungsanordnung 220 zur dichtenden Anlage an die Oberfläche des Unterwerkzeugs 14 gebracht, indem eine entsprechende Kraft erzeugt wird, die das Sichtelement 16 - und damit die Dichtungsanordnung 220 - zu dem Unterwerkzeug 14 hin drängt. Dies kann wie im Zusammenhang mit den Ausführungsformen von Fig. 1 und Fig. 2 bereits erwähnt dadurch erfolgen, dass ein Vakuum zwischen dem Sichtelement 16 und dem Unterwerkzeug 14 erzeugt wird oder entsprechende, auf das Sichtelement 16 wirkende magnetische Kräfte erzeugt werden.

In dem in Fig. 3 gezeigten Beispiel umgreift die Dichtungsanordnung 220 die Randkante 22 des Sichtelements 16, um eine Dichtwirkung bezüglich des Sichtelements 16 zu erzielen, während das dichtende Zusammenwirken mit dem Unterwerkzeug 14 dadurch erzielt wird, dass die in Fig. 3 unten liegende Oberfläche der Dichtungsanordnung 220 auf die Oberfläche des Unterwerkzeugs 14 gedrückt wird.

Wie bei den Ausführungsformen von Fig. 1 und Fig. 2 hindert die Dichtungsanordnung 220 das Kunststoffmaterial 24 am Vordringen auf die Sichtseite des Sichtelements 16.

Bei der Ausführungsform von Fig. 3 kann das Unterwerkzeug 14 besonders einfach gestaltet sein, nämlich als ebene Fläche ohne Vertiefungen oder Erhöhungen, sofern dies den Bereich mit dem Sichtelement 16 betrifft.

Nach dem Aushärten des Kunststoffmaterials 24 werden die das Sichtelement 16 zu dem Unterwerkzeug 14 hin drängenden Kräfte abgeschaltet und das Verbundkarosserieteil wird zusammen mit der Dichtungsanordnung 220 aus dem Werkzeug 10 entnommen, d.h. die Dichtungsanordnung 220 verbleibt in dem Verbundkarosserieteil und kann dort ggf. eine funktionale Rolle übernehmen.

### Bezugszeichenliste

- 10: Werkzeug
- 12: Oberwerkzeug
- 14: Unterwerkzeug
- 16: Sichtelement
- 18: Ausnehmung in 14
- 20: Dichtungsanordnung
- 22: Randkante von 16
- 24: Kunststoffmaterial
- 26: Außenhaut
- 120: Dichtungsanordnung
- 220: Dichtungsanordnung

## Patentansprüche

1. Verfahren zur Herstellung eines Verbund-Karosserieteils für ein Fahrzeug, insbesondere zur Herstellung eines Dachmoduls, in einem Werkzeug (10), welches ein erstes (14) und ein zweites Werkzeugteil (12) umfasst, die relativ zueinander verstellbar sind, wobei
ein flächiges Sichtelement (16) in das erste Werkzeugteil (14) eingelegt wird,
eine Dichtungsanordnung (20, 120, 220) zur dichtenden Anlage an der Randkante (22) des Sichtelements (16) gebracht wird,
Kunststoffmaterial (24) auf der von dem ersten Werkzeugteil (14) abgewandten Seite des Sichtelements (16) aufgebracht wird, wobei
mittels des ersten (14) und des zweiten (12) Werkzeugteils für eine Formgebung des Kunststoffmaterials (24) gesorgt wird, und
das Verbund-Karosserieteil aus dem Werkzeug (10) entnommen wird, wobei das erste Werkzeugteil (14) bzw. das Sichtelement (16) so geformt ist, dass sich das Kunststoffmaterial (24) mindestens zum Teil über die Randkante (22) des Sichtelements (16) hinaus erstreckt und in diesem Bereich durch das erste Werkzeugteil (14) eine Formgebung erfährt.

2. Verfahren nach Anspruch 1, wobei die Dichtungsanordnung (20) an dem ersten Werkzeugteil (14) vorgesehen und aufblasbar ist,
der Umfangsrandbereich des Sichtelements (16) an der Dichtungsanordnung (20) zur dichtenden Anlage gebracht wird, indem die Dichtungsanordnung (20) mit einem Medium aufgeblasen wird, und
das Verbund-Karosserieteil vor dem Entnehmen aus dem Werkzeug (10) durch Ablassen des Aufblas-Mediums aus der Dichtungsanordnung (20) von der Dichtungsanordnung (20) gelöst wird.

3. Verfahren nach Anspruch 2, **dadurch gekennzeichnet, dass** die Dichtungsanordnung (20) im aufgeblasenen Zustand an der Randkante (22) des Sichtelements (16) dichtend anliegt.

4. Verfahren nach Anspruch 2 oder 3, **dadurch gekennzeichnet, dass** die Dichtungsanordnung (20) im aufgeblasenen Zustand die Randkante (22) des Sichtelements (16) umgreift.

5. Verfahren nach einem der Ansprüche 2 bis 4, **dadurch gekennzeichnet, dass** es sich bei dem Aufblasmedium um Luft handelt.

6. Verfahren nach Anspruch 1, wobei die Dichtungsanordnung (220) dichtend mit dem ersten Werkzeugteil (14) zusammenwirkt und beim Entnehmen des Verbund-Karosserieteils aus dem Werkzeug (10) an dem Verbund-Karosserieteil verbleibt.

7. Verfahren nach Anspruch 6, **dadurch gekennzeichnet, dass** die Dichtungsanordnung (220) die Randkante (22) des Sichtteils (16) umgreift.

8. Verfahren nach Anspruch 1, wobei die Dichtungsanordnung (120) an dem ersten Werkzeugteil (14) vorgesehen ist und mindestens in Teilbereichen an der Randkante (22) des Sichtelements (16) dichtend anliegt und mindestens in Teilbereichen an der dem ersten Werkzeugteil (14) zugewandten Seite dichtend anliegt.

9. Verfahren nach einem der vorhergehenden Ansprüche, **dadurch gekennzeichnet, dass** die Dichtungsanordnung (20) in einer Ausnehmung (18) des ersten Werkzeugteils (14) angeordnet ist, wobei die Ausnehmung auch zur Aufnahme des Sichtelements (16) ausgebildet ist.

10. Verfahren nach einem der vorhergehenden Ansprüche, **dadurch gekennzeichnet, dass** mindestens in einem Teilbereich zwischen dem ersten Werkzeugteil (14) und dem Sichtelement (16) ein Unterdruck erzeugt wird.

11. Verfahren nach einem der vorhergehenden Ansprüche, **dadurch gekennzeichnet, dass** eine auf das Sichtelement (16) wirkende magnetische Kraft erzeugt wird, um das Sichtelement (16) an dem ersten Werkzeugteil (14) zu halten.

12. Verfahren nach einem der vorhergehenden Ansprüche, **dadurch gekennzeichnet, dass** es sich bei dem Sichtelement (16) um ein Blechteil handelt.

13. Verfahren nach einem der vorhergehenden Ansprüche, **dadurch gekennzeichnet, dass** das Sichtelement (16) auf der Außenseite des Verbund-Karosserieteils liegt.

14. Verfahren nach einem der vorhergehenden Ansprüche, **dadurch gekennzeichnet, dass** das Sichtelement (16) im Werkzeug (10) mit dem Kunststoffmaterial (24) hinterpresst, hinterspritzt oder hinterfüttert wird.

15. Verfahren nach einem der vorhergehenden Ansprüche, **dadurch gekennzeichnet, dass** das Kunststoffmaterial (24) mittels eines Lang-Faser-Injektions-Verfahrens (LFI-Verfahren) in das Werkzeug (10) eingebracht wird.

16. Verfahren nach einem der vorhergehenden Ansprüche, **dadurch gekennzeichnet, dass** das Kunststoffmaterial (24) als mit Kunststoff verstärkte Wabenstruktur in das Werkzeug eingebracht wird.

17. Verfahren nach Anspruch 16, **dadurch gekennzeichnet, dass** es sich bei der Wabenstruktur um eine Papier-Wabenstruktur mit einer mit Polyurethan getränkten Glasfasermatte handelt.

18. Verfahren nach Anspruch 17, **dadurch gekennzeichnet, dass** das Polyurethan mittels eines Lang-Faser-Injektions-Verfahrens aufgebracht wird.

19. Verfahren nach einem der vorhergehenden Ansprüche, **dadurch gekennzeichnet, dass** das Kunststoffmaterial (24) Polyurethan aufweist.

20. Verfahren nach einem der vorhergehenden Ansprüche, **dadurch gekennzeichnet, dass** das erste Werkzeugteil (14) unten liegt und das zweite Werkzeugteil (12) oben liegt.

21. Verfahren nach einem der vorhergehenden Ansprüche, **dadurch gekennzeichnet, dass** die gesamte von der Dichtungsanordnung (20, 120, 220) umschlossene Fläche auf der von dem ersten Werkzeugteil (14) abgewandten Seite des Sichtelements (16) mit dem Kunststoffmaterial (24) versehen wird.

22. Verfahren nach einem der vorhergehenden Ansprüche, **dadurch gekennzeichnet, dass** vor dem Einbringen des Kunststoffmaterials (24) eine Außenhaut (26) in das zweite Werkzeugteil (12) eingelegt wird, wobei das Kunststoffmaterial (24) dann zwischen der Außenhaut (26) und dem Sichtelement (16) eingebracht wird.

23. Verfahren nach einem der Ansprüche 21 oder 22, **dadurch gekennzeichnet, dass** es sich bei dem Verbund-Karosserieteil um ein Dachmodul handelt, wobei die Außenhaut (26) die Dachhaut bildet und das Sichtelement (16) auf der dem Fahrzeuginnenraum zugewandten Seite des Dachmoduls liegt.

24. Verfahren nach einem der Ansprüche 21 bis 23, **dadurch gekennzeichnet, dass** die Außenhaut (26) aus Kunststofffolie oder Stahl- oder Aluminiumblech gefertigt ist.

## Claims

1. Method for production of a composite body part for a vehicle, in particular for production of a roof module, in a mould (10) which comprises a first mould part (14) and a second mould part (12), which are adjustable relative to each other, wherein
a planar visible element (16) is placed into the first mould part (14),
a sealing arrangement (20, 120, 220) is brought into sealing contact with the border edge (22) of the visible element (16),
plastics material (24) is applied on that side of the visible element (16) which faces away from the first mould part (14), wherein
the plastics material (24) is shaped by means of the first mould part (14) and the second mould part (12), and
the composite body part is removed from the mould (10), wherein
the first mould part (14) or the visible element (16) is shaped in such a manner that the plastics material (24) extends at least partially beyond the border edge (22) of the visible element (16) and undergoes shaping in this region by means of the first mould part (14).

2. Method according to Claim 1, wherein the sealing arrangement (20) is provided on the first mould part (14) and can be inflated,
the circumferential border region of the visible element (16) is brought into sealing contact with the sealing arrangement (20) by the sealing arrangement (20) being inflated with a medium, and,
before removal from the mould (10), the composite body part is detached from the sealing arrangement (20) by the inflation medium being let out of the sealing arrangement (20).

3. Method according to Claim 2, **characterized in that**, in the inflated state, the sealing arrangement (20) bears in a sealing manner against the border edge (22) of the visible element (16).

4. Method according to Claim 2 or 3, **characterized in that**, in the inflated state, the sealing arrangement (20) engages around the border edge (22) of the visible element (16).

5. Method according to one of Claims 2 to 4, **characterized in that** the inflation medium is air.

6. Method according to Claim 1, wherein the sealing arrangement (220) interacts in a sealing manner with the first mould part (14) and remains on the composite body part when the composite body part is removed from the mould (10).

7. Method according to Claim 6, **characterized in that** the sealing arrangement (220) engages around the border edge (22) of the visible part (16).

8. Method according to Claim 1, wherein the sealing arrangement (120) is provided on the first mould part (14) and, at least in partial regions, bears in a sealing manner against the border edge (22) of the visible element (16) and, at least in partial regions, bears in a sealing manner against the side facing the first mould part (14).

9. Method according to one of the preceding claims, **characterized in that** the sealing arrangement (20) is arranged in a recess (18) of the first mould part (14), the recess also being designed to receive the visible the element (16).

10. Method according to one of the preceding claims, **characterized in that** a negative pressure is generated at least in a partial region between the first mould part (14) and the visible element (16).

11. Method according to one of the preceding claims, **characterized in that** a magnetic force acting on the visible element (16) is generated in order to hold the visible element (16) on the first mould part (14).

12. Method according to one of the preceding claims, **characterized in that** the visible element (16) is a sheet-metal part.

13. Method according to one of the preceding claims, **characterized in that** the visible element (16) is located on the outside of the composite body part.

14. Method according to one of the preceding claims, **characterized in that** the visible element (16) is compression backmoulded, injection backmoulded or backfilled with the plastics material (24) in the mould (10).

15. Method according to one of the preceding claims, **characterized in that** the plastics material (24) is placed into the mould (10) by means of a long-fibre injection process (LFI process).

16. Method according to one of the preceding claims, **characterized in that** the plastics material (24) is placed into the mould in the form of a plastics-reinforced honeycomb structure.

17. Method according to Claim 16, **characterized in that** the honeycomb structure is a paper honeycomb structure with a glass fibre mat impregnated with polyurethane.

18. Method according to Claim 17, **characterized in that** the polyurethane is applied by means of a long-fibre injection process.

19. Method according to one of the preceding claims, **characterized in that** the plastics material (24) contains polyurethane.

20. Method according to one of the preceding claims, **characterized in that** the first mould part (14) lies at the bottom and the second mould part (12) lies at the top.

21. Method according to one of the preceding claims, **characterized in that** the entire surface enclosed by the sealing arrangement (20, 120, 220) on that side of the visible element (16) which faces away from the first mould part (14) is provided with the plastics material (24).

22. Method according to one of the preceding claims, **characterized in that** an outer skin (26) is placed into the second mould part (12) before the plastics material (24) is introduced, the plastics material (24) then being introduced between the outer skin (26) and the visible element (16).

23. Method according to either of Claims 21 and 22, **characterized in that** the composite body part is a roof module, the outer skin (26) forming the roof skin and the visible element (16) lying on that side of the roof module which faces the vehicle interior.

24. Method according to one of Claims 21 to 23, **characterized in that** the outer skin (26) is manufactured from plastics sheeting, or steel or aluminium sheet.

## Revendications

1. Procédé de fabrication d'un élément composite de carrosserie pour véhicule, en particulier de fabrication d'un module de toit, dans un outil (10) qui comporte une première pièce d'outil (14) et une deuxième pièce d'outil (12) qui peuvent être déplacées l'une par rapport à l'autre, et dans lequel :
un élément transparent plat (16) est placé dans la première pièce d'outil (14),
un ensemble d'étanchéité (20, 120, 220) est placé sur la bordure (22) de l'élément transparent (16) de manière à permettre une pose étanche,
une matière synthétique (24) est appliquée sur le côté de l'élément transparent (16) non tourné vers la première pièce d'outil (14),
le moulage de la matière synthétique (24) est assuré au moyen de la première pièce d'outil (14) et de la deuxième pièce d'outil (12),
l'élément composite de carrosserie est retiré de l'outil (10),
la première pièce d'outil (14) ou l'élément transparent (16) ayant une forme telle qu'au moins une partie de la matière synthétique (24) s'étend au-delà de la bordure (22) de l'élément transparent (16), cette partie étant moulée par la première pièce d'outil (14).

2. Procédé selon la revendication 1, dans lequel l'ensemble d'étanchéité (20) est prévu sur la première pièce d'outil (14) et peut être gonflé,
la partie de bord périphérique de l'élément transparent (16) est placée de manière étanche sur l'ensemble d'étanchéité (20) en gonflant l'ensemble d'étanchéité (20) à l'aide d'un fluide et
l'élément composite de carrosserie est séparé de l'ensemble d'étanchéité (20) avant d'être enlevé de l'outil (10) en évacuant le fluide de gonflage hors de l'ensemble d'étanchéité (20).

3. Procédé selon la revendication 2, **caractérisé en ce que** lorsqu'il est à l'état gonflé, l'ensemble d'étanchéité (20) repose de manière étanche sur la bordure (22) de l'élément transparent (16).

4. Procédé selon les revendications 2 ou 3, **caractérisé en ce que** lorsqu'il est à l'état gonflé, l'ensemble d'étanchéité (20) chevauche la bordure (22) de l'élément transparent (16).

5. Procédé selon l'une des revendications 2 à 4, **caractérisé en ce que** le fluide de gonflage est l'air.

6. Procédé selon la revendication 1, dans lequel l'ensemble d'étanchéité (220) coopère avec la première pièce d'outil (14) pour assurer l'étanchéité et reste sur l'élément composite de carrosserie lorsque l'élément composite de carrosserie est retiré de l'outil (10).

7. Procédé selon la revendication 6, **caractérisé en ce que** l'ensemble d'étanchéité (220) chevauche la bordure (22) de l'élément transparent (16).

8. Procédé selon la revendication 1, dans lequel l'ensemble d'étanchéité (120) est prévu sur la première pièce d'outil (14), repose de manière étanche au moins sur certaines parties de la bordure (22) de l'élément transparent (16) et repose de manière étanche au moins sur certaines parties du côté tourné vers la première pièce d'outil (14).

9. Procédé selon l'une des revendications précédentes, **caractérisé en ce que** l'ensemble d'étanchéité (20) est disposé dans une découpe (18) de la première pièce d'outil (14), la découpe étant configurée pour reprendre également l'élément transparent (16).

10. Procédé selon l'une des revendications précédentes, **caractérisé en ce qu'**une dépression est établie dans une zone située entre la première pièce d'outil (14) et l'élément transparent (16).

11. Procédé selon l'une des revendications précédentes, **caractérisé en ce qu'**une force magnétique qui agit sur l'élément transparent (16) est appliquée pour maintenir l'élément transparent (16) sur la première pièce d'outil (14).

12. Procédé selon l'une des revendications précédentes, **caractérisé en ce que** l'élément transparent (16) est un élément en feuille.

13. Procédé selon l'une des revendications précédentes, **caractérisé en ce que** l'élément transparent (16) est placé sur le côté extérieur de l'élément composite de carrosserie.

14. Procédé selon l'une des revendications précédentes, **caractérisé en ce que** l'élément transparent (16) est refoulé, injecté ou amené par l'arrière dans l'outil (10) avec la matière synthétique (24).

15. Procédé selon l'une des revendications précédentes, **caractérisé en ce que** la matière synthétique (24) est apportée dans l'outil (10) par un procédé d'injection à fibres longues (procédé LFI).

16. Procédé selon l'une des revendications précédentes, **caractérisé en ce que** la matière synthétique (24) est apportée dans l'outil sous la forme d'une structure en nid d'abeilles renforcée de matière synthétique.

17. Procédé selon la revendication 16, **caractérisé en ce que** la structure en nid d'abeilles est une structure en nid d'abeilles en papier dotée d'un mat de fibres de verre imprégné de polyuréthane.

18. Procédé selon la revendication 17, **caractérisé en ce que** le polyuréthane est appliqué au moyen d'un procédé d'injection de longues fibres.

19. Procédé selon l'une des revendications précédentes, **caractérisé en ce que** la matière synthétique (24) contient du polyuréthane.

20. Procédé selon l'une des revendications précédentes, **caractérisé en ce que** la première pièce d'outil (14) est située en position inférieure et la deuxième pièce d'outil (12) en position supérieure.

21. Procédé selon l'une des revendications précédentes, **caractérisé en ce que** la totalité de la surface englobée par l'ensemble d'étanchéité (20, 120, 220) est dotée de la matière synthétique (24) sur le côté de l'élément transparent (16) non tourné vers la première pièce d'outil (14).

22. Procédé selon l'une des revendications précédentes, **caractérisé en ce qu'**avant d'apporter la matière synthétique (24), on place une peau extérieure (26) dans la deuxième pièce d'outil (12), la matière synthétique (24) étant ensuite apportée entre la peau extérieure (26) et l'élément transparent (16).

23. Procédé selon l'une des revendications 21 ou 22, **caractérisé en ce que** l'élément composite de carrosserie est un module de toit, la peau extérieure (26) formant la peau du toit et l'élément transparent (16) étant situé sur le côté du module de toit tourné vers l'habitacle du véhicule.

24. Procédé selon l'une des revendications 21 à 23, **caractérisé en ce que** la peau extérieure (26) présente la forme d'une feuille de matière synthétique ou d'une tôle d'acier ou d'aluminium.
